(19) Europäisches Patentamt
European Patent Office
Office européen des brevets

(11) **EP 1 640 754 A1**

(12) **EUROPEAN PATENT APPLICATION**

(43) Date of publication:
**29.03.2006 Bulletin 2006/13**

(51) Int Cl.:
***G02B 6/34*** *(2006.01)*

(21) Application number: **04425709.5**

(22) Date of filing: **24.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **STMicroelectronics S.r.l.**
**20041 Agrate Brianza (Milano) (IT)**

(72) Inventor: **Lenzi, Maurizio**
**28100 Novara (IT)**

(74) Representative: **Siniscalco, Fabio et al**
**JACOBACCI & PARTNERS S.p.A.**
**Via delle Quattro Fontane, 15**
**00184 Roma (IT)**

(54) **Optical interferometer device description**

(57)     Described is an optical interferometer device comprising an input coupler (12) connected to at least one input waveguide (10), an output coupler (14) connected to at least one output waveguide (11) and a multiplicity of waveguide branches (13) connected between the input coupler and the output coupler, at least two adjacent branches of this multiplicity having geometric and/or optical characteristics different from each other, so that a light signal will be transmitted through one of them with a predetermined phase shift with respect to a light signal transmitted through the other branch.

At least one of the two adjacent branches comprises at least one first waveguide part (A1,A3) having a first contrast index ($N_L$) and at least one second waveguide part (A2) having a second contrast index ($N_H$) greater than the first.

The device has a structure that permits great versatility of design. In particular, it is possible to realize devices insensitive to temperature variations and devices of limited (reduced) encumbrance.

FIG. 3

**Description**

The present invention relates to integrated optical circuits and, more particularly, to an optical interferometer device as defined in the preamble of Claim 1.

Various devices are known that can be realized as integrated optical circuits, cases in point being optical switches, multiplexers and demultiplexers, Mach-Zehnder interferometers, arrayed waveguide gratings (or AWGs), and similar. These devices are utilized for the construction of optical circuits for the transmission of information in analog and/or digital form by means of light signals. In the telecommunication and data transmission field there is a tendency to replace the traditional electric signals on electric lines by light signals on optical fibres and the electric circuits by optical circuits. The transmission of information is effected by means of light signal modulation techniques and the light signals are processed by means of optical circuits that execute all the functions necessary for distribution, amplification, multiplation, etc.

Integrated optical circuits are formed on plane substrates that comprise as fundamental components optical waveguides capable of receiving light signals from optical input fibres, processing them and then routing the resulting optical signals onto optical output fibres. Optical circuits can be realized by utilizing the fabrication techniques typical of integrated electronic semiconductor circuits, and this makes possible the production of integrated optoelectronic systems on common substrates. According to a known technique, in particular, the optical waveguides are formed on a silicon substrate or on a dielectric substrate by making use of the usual photo-lithographic processes. The transmission means that constitutes the core of the waveguides is a material, doped silicon dioxide for example, having an index of refraction higher than that of the substrate and of possible other layers that, together with the substrate, constitute the cladding of the waveguides.

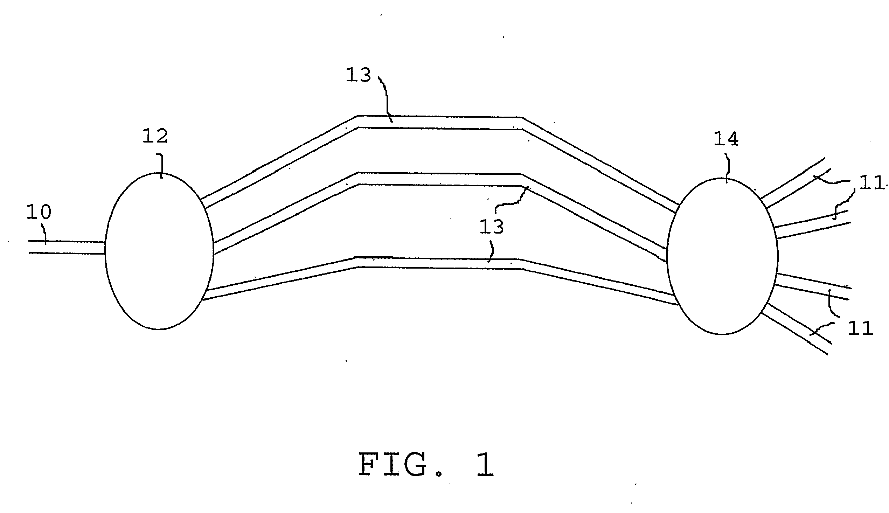

An important application of integrated optical circuits concerns multiplation/demultiplation, that is to say, the function that renders possible transmission by means of an optical network of optical signals of different wavelengths on a single optical fibre. At the present time, for example, it is possible to transmit up to 160 different wavelengths on one optical fibre. A device that performs this function is the previously mentioned arrayed waveguide grating (AWG). As schematically shown in Figure 1, a typical AWG multiplator has at least one input, represented by a waveguide 10 on the drawing, and a multiplicity of outputs (four in this particular example) represented by a like number of waveguides 11 on the drawing. The light energy associated with a composite signal applied as input is distributed by an input coupler 12 among a multiplicity of waveguide branches 13 (for the sake of simplicity, only three are shown in Figure 1) that terminate at an output coupler 14. Each branch constitutes an optical track of different length. The differences between the optical track lengths are chosen in such a manner that the phase shift of the light energy transmitted in adjacent branches has a predetermined value that is roughly equal for each pair of adjacent branches. The phase shift exerts an influence on the manner in which the light energy becomes recombined by interference in the output coupler 14. The output coupler 14 provides signals of different wavelengths on the output waveguides 11.

One of the problems of integrated optical circuits, like the AWG device of Figure 1, is constituted by their temperature dependency. Since the materials employed for the waveguides, in particular the material of the cores, have indices of refraction that depend on the temperature, the phase shifts of light energy transmitted from the input to the output will vary with the temperature. These phase shift variations are typically of the order of 0.01 nm/°C in the silicon dioxide and give rise to signal losses and/or interference (cross-talk) in the communication system that utilizes the AWG device.

Another problem of integrated AWG optical circuits consists of the fact that their encumbrance is often considered to be excessive. Their encumbrance is essentially determined by the length of the branches and this, in its turn, is determined by the contrast index of the waveguides that constitute the branches, i.e. by the difference between the refraction index of the cores and the refraction index of the claddings, and by the width of the waveguides. Once the contrast index has been fixed, shorter branches can be had only by increasing the width of the waveguides. But the maximum width is governed by the need for maintaining a monomodal transmission of the light energy. Furthermore, whenever a large number of branches is involved, 100 to 200 for example, it is inevitable that the greater part of them will be curved, this on account of the fact that the optical couplers have to have relatively small dimensions. Nevertheless, even the curvature of the branches is subject to limits, which are imposed by the need for assuring the geometric and physical conditions for a correctly guided transmission that will be as far as possible free from losses and dispersions. A known manner of reducing the radii of curvature of the branches consists of increasing the contrast index of the waveguides by, for example, increasing the doping of the core. But even this measure is subject to limits deriving from the variability of the fabrication parameters: it may happen, in fact, that the index of refraction of the core is not constant, and this not only as regards different devices constructed on the same wafer of silicon, but also within one and the same device, and this prejudices its proper functioning. A known technique, described in US 6,115,520, for reducing the size of a Mach-Zehnder interferometer - i.e. a device similar to an AWG, but with only two branches - without reducing the radii of curvature of the branches envisages the halving of each branch and the introduction of light refrectors for doubling the optical length of the branch. Nevertheless, this techniques calls for rather complex additional processing and is in practice limited to Mach-Zehnder interferometers or AWG devices with few branches.

In general, the object of the invention is to make available an optical interferometer device of the type described at the beginning having a structure that will make possible a great versatility of design and prove capable of being realized without having to have recourse to any complex supplementary processing.

A particular object of the invention is to make available an optical interferometer device insensitive to temperature variations.

Yet another object of the invention is to make available an optical interferometer device of reduced size.

These objects are attained by realizing the optical interferometer device characterized in general terms in Claim 1, while particular embodiments thereof are described in the dependent claims.

The invention will be more readily understood from the following detailed description of some of its embodiments, the description being given solely by way of example and makes reference to the attached drawings, of which:

- Figure 1 shows an AWG device in accordance with prior art in schematic form;
- Figure 2 shows an AWG device insensitive to temperature variations in accordance with an embodiment of the invention, again in schematic form,
- Figure 3 shows in schematic form a compact AWG device in accordance with another embodiment of the invention, and
- Figure 4 shows a partial longitudinal section through a branch of the device of Figure 2 or the device of Figure 3.

Let us again consider the AWG device of Figure 1. The phase difference $\Delta\phi$ between the light signals guided in the two adjacent branches at the end of the respective optical tracks is expressed by the following equation:

$$\Delta\phi = \frac{2\pi}{\lambda}\left[\int_0^{L_1} N_{eff}(l) * dl - \int_0^{L_2} N_{eff}(l) * dl\right] \qquad (1)$$

where $N_{eff}(l)$ is the effective local index of refraction, $L_1$ and $L_2$ are the geometric lengths of the two branches and $\lambda$ is the wavelength of the light energy propagated in the two branches.

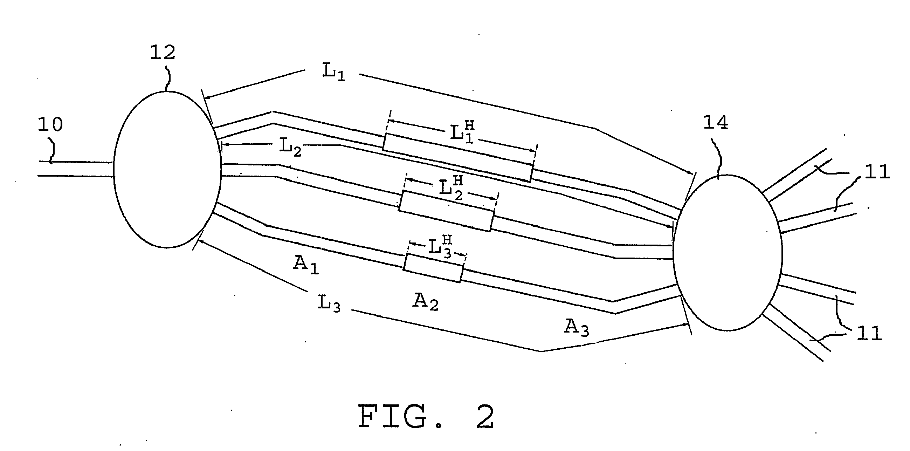

Referring now to Figure 2, where parts equal to those of Figure 1 are indicated by the same reference numbers, every branch of the AWG device is constituted by waveguide segments having two different contrast indices. The segments of which the lengths are indicated by $L_1^H, L_2^H$ and $L_3^H$ have higher contrast indices ($N_H$) and the remaining segments have lower contrast indices ($N_L$). Each of the symbols $L_1$, $L_2$ and $L_3$ indicate the overall length of one of the three branches. If we now consider the adjacent branches identified by the suffices 1 and 2 and use $\Delta L$ to indicate the difference between the geometric lengths of the two adjacent branches and $\Delta L^H$ to indicate the difference between the geometric lengths of the segments having the higher contrast index of these two adjacent branches, equation (1) can be rewritten as follows:

$$\Delta\phi = \frac{2\pi}{\lambda}\left[\left(N_L * \left(L_1 - L_1^H\right) + N_H * L_1^H\right) - \left(N_L * \left(L_2 - L_2^H\right) + N_H * L_2^H\right)\right] =$$

$$= \frac{2\pi}{\lambda}\left[N_L * L_1 + \left(N_H - N_L\right) * L_1^H - N_L * L_2 + \left(N_H - N_L\right) * L_2^H\right] =$$

$$= \frac{2\pi}{\lambda}\left[N_L * \Delta L + \left(N_H - N_L\right) * \Delta L^H\right] \qquad (2)$$

Differentiating the expression (2) with respect to the temperature ($T$) (supposing the thermal lengthening to be negligible), one obtains:

$$\frac{d\Delta\phi}{dT} = \frac{2\pi}{\lambda}\left[\frac{dN_L}{dT}*\Delta L + \left(\frac{dN_H}{dT} - \frac{dN_L}{dT}\right)*\Delta L^H\right]$$

(3)

The condition that the phase shift should be independent of the temperature $\left(\frac{d\Delta\phi}{dT} = 0\right)$ is satisfied if

$$\Delta L = 0$$

and                                                            (4)

$$\frac{dN_H}{dT} \cong \frac{dN_L}{dT}$$

.

i.e. if the branches have the same geometric length ($\Delta L$=0) and if the contrast indices $N_H$ and $N_L$ have the same behaviour with respect to the temperature. Naturally, the same considerations are valid also for the phase shift between the two adjacent branches distinguished by the suffices 2 and 3 and, in the more general case of an AWG device with a number of branches greater than three, for all the phase shifts between adjacent branches.

If, therefore, one wants to design an AWG device independent of the temperature, one has to choose the contrast indices and the lengths in such a manner that the phase shift between adjacent branches will be the one defined by expression (2) and that the relationships (4) will be satisfied.

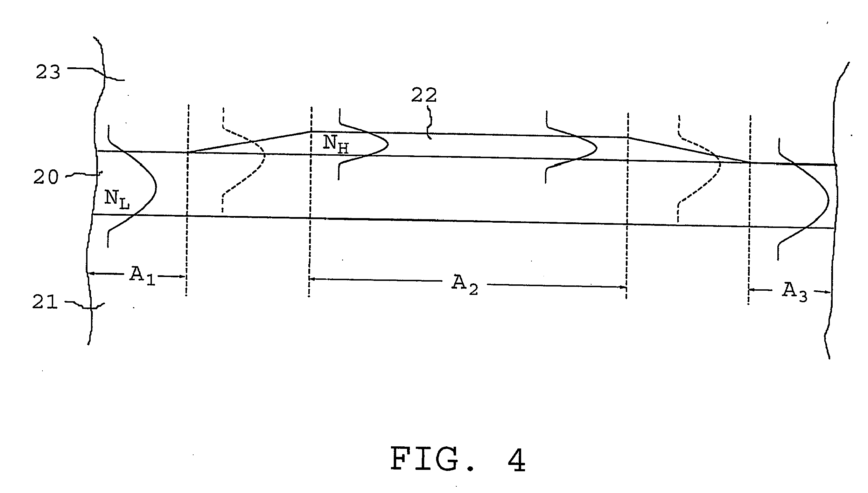

Figure 4 shows a preferred embodiment of a part of a branch of the AWG device in longitudinal section. The branch comprises a strip 20 of material having a contrast index $N_L$. The strip 20 extends between the first and the second optical coupler (not shown in Figure 4) on a substrate 21 of material that constitutes the lower cladding of the waveguide and is surmounted by a strip 22 of a material having a contrast index $N_H > N_L$. The lateral surfaces and the upper surface of the strip 20 with a low contrast index and the segment 22 of material with a higher contrast index are covered by a cladding material 23 preferably of the same material as the substrate. The ends of the segment 22 of material with the higher contrast index are inclined at a predetermined angle with respect to the optical axis of the strip 20 having the lower contrast index. Preferably, the cladding material (21 and 23) is non-doped silicon dioxide, the material with the low contrast index (20) is silicon dioxide doped with a low concentration of phosphorus or germanium (4% by weight, for example) and the material with the high contrast index (22) is silicon dioxide doped with a high concentration of phosphorus or germanium (greater than 7% by weight, for example). The width of the strip 22 may be equal to or less than the width of the underlying strip 20.

When in operation, the structure behaves like a waveguide made up of three interconnected segments: a first segment A1 having as core the part of the strip 20 connected to the input coupler, a second segment A2 having as core the strip 22 and a third segment A3 having as core the part of the strip 20 connected to the output coupler. It should be noted that the light energy becomes propagated in the region with the higher refraction index, so that the part of the strip 20 beneath the strip 22 constitutes the lower cladding of the segment of the waveguide that has the strip 22 as its core. Furthermore, the energy becomes propagated at a phase velocity proportional to the index of refraction; in the described example, therefore, a light signal will pass through the segment A2 at a phase velocity higher than the one with which it would pass through the segments A1 and A3. It follows from this that, given an appropriate choice of the lengths of the various segments, especially the length of segment A2, the phase lag of each of the branches of the AWG device can be determined easily. It should also be noted that the connection of the branches to the input and output couplers is effected with small insertion losses thanks to the low contrast index of the segments A1 and A3.

The second segment A2 is linked with the first and the third segment A1 and A3 in an adiabatic manner, so that a light signal that enters the first segment passes into the wave guide that has as its core the strip 22 with the higher index of refraction substantially without losses and becomes propagated, still without losses, in the third segment.

Since the materials of the cores of the waveguide segments that make up each of the branches of the device differ from each other only on account of the doping, the temperature behaviour of the respective contrast indices is substantially the same, and one of the conditions of (4) is therefore satisfied. The other condition ($\Delta L = 0$) can be satisfied by making all the branches have the same length.

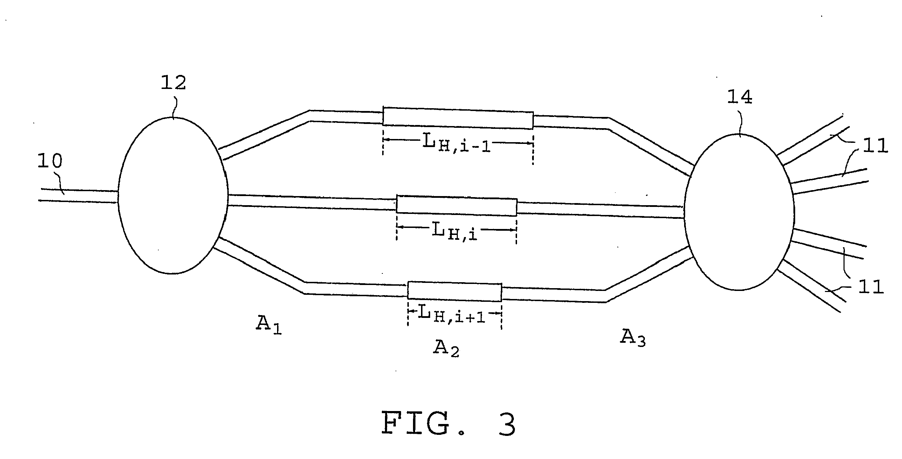

Figure 3 shows an AWG device similar to the one of Figure 2; various parts of the device are therefore indicated by the same reference numbers and the structure of each of the branches is equal to the one illustrated by Figure 4. Nevertheless, this embodiment of the invention is not intended to render the device insensitive to temperature variations, the aim being rather to obtain a compact device, i.e. having as limited as possible an encumbrance. For this reason, the length of the various waveguide segments that unite the input coupler with the output coupler are chosen in such a manner as to make the phase shifts of the light signal between adjacent branches, defined by expression (2), roughly equal to each other. In general, given an AWF device having n branches, the phase shift between adjacent branches is described by the following equation, where $\lambda$ indicates the wavelength of the light energy that is being propagated in the two branches, i indicates a generic branch, $\Delta L_i$ indicates the difference between the lengths of two adjacent branches,

$\Delta L_i^H$ indicates the difference between the lengths of the segments with high contrast index of the same adjacent branches $N_H$ and $N_L$ indicate, respectively, the higher contrast index and lower contrast index:

$$\Delta \phi_i = \frac{2\pi}{\lambda} * \left[ N_L * \Delta L_i + \left( N_H - N_L \right) * \Delta L_i^H \right]$$

The phase shifts between adjacent branches can readily be determined by appropriately choosing the lengths of the waveguide segments that constitute them.

Although only two embodiments of the present invention have here been described and illustrated, it is clear that numerous variants and modifications are possible within the limits of one and the same inventive concept. For example, not all the branches of the interferometer device need necessarily contain a waveguide segment with a core having a higher contrast index, there may be provided branches with more than one segment of this type, the interferometer device may have only two branches, like the Mach-Zehnder interferometer, and the optical couplers could be simple "Y" couplers or also directional couplers.

**Claims**

1. An optical interferometer device comprising

   - an input coupler (12) connected to at least one input waveguide (10),
   - an output waveguide (14) connected to at least one output waveguide (11) and
   - a multiplicity of waveguide branches (13) connected between the input coupler and the output coupler,

   at least two adjacent branches of said multiplicity having geometric and/or optical characteristics different from each other, so that a light signal will be transmitted through one of them with a predetermined phase shift with respect to a light signal transmitted through the other branch,
   **characterized in that** at least one of the two adjacent branches comprises at least one first waveguide part (A1, A3) having a first contrast index ($N_L$) and at least one second waveguide part (A2) having a second contrast index ($N_H$) greater that the first.

2. A device in accordance with Claim 1, wherein the branches of the multiplicity of branches (13) are all of substantially the same length and the contrast indices of the first part (A1, A3) and the second part (A2) vary in substantially the same manner with the temperature.

3. A device in accordance with Claim 1, wherein the lengths of the at least one first waveguide part (A1, A3) and the at least one second waveguide part (A2) are chosen in such a manner as to obtain the desired phase lag in accordance with the relationship

$$\Delta \phi_i = \frac{2\pi}{\lambda} * \left[ N_L * \Delta L_i + \left( N_H - N_L \right) * \Delta LH_I \right]$$

where $\lambda$ is the wavelength of the optical signal; i is the order number of a generic branch, $\Delta L_i$ is the difference between the lengths of the at least two adjacent branches, $\Delta L_i^H$ is the difference between the lengths of the parts (A2) with the high contrast index of the aforesaid two adjacent branches and $N_L$ and $N_H$ are, respectively, the first and the second contrast index.

4. A device in accordance with Claim 1, wherein the said at least one of the two adjacent branches comprises a waveguide segment (A2) having the second contrast index ($N_H$) that is adiabatically linked at its two ends with two respective waveguide segments (A1, A3) having the first contrast index ($N_L$).

5. A device in accordance with Claim 4, wherein the said at least one of the two adjacent branches comprises a first strip (20) of silicon dioxide doped with phosphorus and/or germanium at a given concentration and a second strip (22), shorter than the first strip (20) and superposed on it, of silicon dioxide doped with phosphorus and/or germanium at a higher concentration than the first strip, the second strip (22) comprising the core of the waveguide segment (A2) having the second contrast index ($N_H$) and the first strip (20) comprising the cores of the two waveguide segments (A2, A3) having the first contrast index ($N_L$).

FIG. 1

FIG. 2

FIG. 3

FIG. 4

**European Patent Office**

**EUROPEAN SEARCH REPORT**

Application Number

EP 04 42 5709

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 864 891 A (AKZO NOBEL N.V) 16 September 1998 (1998-09-16) * column 1, line 29 - line 46 * * column 1, line 58 * * column 2, line 35 - line 57 * ----- | 1-4 | G02B6/34 |
| Y | | 5 | |
| Y | PATENT ABSTRACTS OF JAPAN vol. 011, no. 015 (P-536), 16 January 1987 (1987-01-16) & JP 61 190307 A (MATSUSHITA ELECTRIC IND CO LTD), 25 August 1986 (1986-08-25) * abstract; figure 1 * ----- | 5 | |

TECHNICAL FIELDS SEARCHED (Int.Cl.7)

G02B

The present search report has been drawn up for all claims

| Place of search | Date of completion of the search | Examiner |
|---|---|---|
| The Hague | 4 March 2005 | Mouget, M |

EPO FORM 1503 03.82 (P04C01)

**ANNEX TO THE EUROPEAN SEARCH REPORT**
**ON EUROPEAN PATENT APPLICATION NO.**                    EP 04 42 5709

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2005

| Patent document cited in search report | Publication date | Patent family member(s) | | Publication date |
|---|---|---|---|---|
| EP 0864891 A | 16-09-1998 | EP | 0864891 A1 | 16-09-1998 |
| | | CA | 2289500 A1 | 11-09-1998 |
| | | DE | 69804955 D1 | 23-05-2002 |
| | | EP | 0975998 A1 | 02-02-2000 |
| | | US | 6377722 B1 | 23-04-2002 |
| JP 61190307 A | 25-08-1986 | NONE | | |

EPO FORM P0459

For more details about this annex : see Official Journal of the European Patent Office, No. 12/82